# EUROPÄISCHE PATENTANMELDUNG

(11) **EP 0 619 942 A1**
(43) Veröffentlichungstag der Anmeldung: **19.10.1994**
(21) Anmeldenummer: 94810154.8
(22) Anmeldetag: 09.03.1994
(51) Int. Cl.: A01J 25/15, A01J 25/12

(54) **Anlage für die Herstellung von Hart- und Extrahartkäse**

(30) Priorität: 13.04.1993 CH 1110/93
(71) Anmelder: APV (SCHWEIZ) AG, CH-3076 Worb (CH)
(72) Erfinder: Leuenberger, Ulrich, CH-3555 Trubschachen (CH)
(74) Vertreter: Roshardt, Werner Alfred, Dipl.-Phys.

(57) **Zusammenfassung**

Bei einer Anlage zum Herstellen von Hart- und Extrahartkäse sind mehrere Pressvorrichtungen in einer gemeinsamen Wanne (4.1) mit Deckel (5.1) untergebracht. Der Deckel weist ein integriertes Reinigungssystem zum Reinigen des Wanneninnenraums auf.

## Beschreibung

### Technisches Gebiet

Die Erfindung betrifft eine Anlage für die Herstellung von Hart- und Extrahartkäse mit mindestens einer Pressvorrichtung.

### Stand der Technik

Hart- und Extrahartkäse werden durch Pressen eines Sirten-Käse-Bruchgemisches in einem hohlzylindrischen oder rechteckigen Behälter mittels pneumatisch betätigbarer Press- und ortsfester Gegenplatte hergestellt. Eine solche Vorrichtung ist beispielsweise aus der CH-670 929 bekannt. Eine Weiterentwicklung dieser Vorrichtung ist ferner im schweiz. Patentgesuch Nr. 1 268/92-2 beschrieben.

Die Pressvorrichtungen der genannten Art werden bei grösseren Anlagen nebeneinander auf einem Tragbalken montiert. Der Tragbalken ist um seine Längsachse rotierbar, so dass die zylindrischen Gefässe geleert werden können.

Ein Problem bei den bekannten Anlagen und überhaupt bei Käsepressen für Hart- und Extrahartkäse besteht darin, dass nach jedem (automatisierten) Pressvorgang die Vorrichtung weitgehend von Hand peinlich genau gereinigt oder überflutet werden muss. Dies ist nicht nur mühsam, sondern kostet auch Arbeitsstunden resp. zusätzliche Speicherbehälter für die Reinigungsflüssigkeit. Schliesslich erfordern die bekannten Anlagen beträchtliche bauliche Vorkehrungen. Neben ausreichenden Fundamenten sind nämlich auch Abwasserkanäle und dergleichen vorzusehen, um während des Pressens und beim Reinigen die anfallende Flüssigkeit resp. das Reinigungswasser abführen zu können.

### Darstellung der Erfindung

Aufgabe der Erfindung ist es nun, eine Anlage der eingangs genannten Art anzugeben, die die beim Stand der Technik vorhandenen Nachteile vermeidet. Insbesondere sollte die Reinigung einer erfindungsgemässen Anlage beträchtlich erleichtert sein.

Erfindungsgemäss besteht die Lösung darin, dass die mindestens eine Pressvorrichtung in einem zusammen mit der Pressvorrichtung wendbaren Pressencontainer umfassend eine Wanne mit Deckel untergebracht ist.

Pressencontainer und Pressvorrichtungen stellen im Sinn der Erfindung eine kompakte Einheit dar.

Die Wanne sammelt die abgepresste Sirte oder behält die Reinigungsflüssigkeit zurück, so dass die Flüssigkeiten über gezielt vorgesehene Abflüsse entfernt werden können. Der Deckel ist sowohl bei einem einseitig als auch einem beidseitig bestückten Tragbalken als Auffangvorrichtung für die genannten Flüssigkeiten dienlich. Dadurch dass mehrere resp. alle Pressvorrichtungen in einem gemeinsamen Behälter untergebracht sind, kann bei den einzelnen Pressvorrichtungen resp. Pressformen auf isolierende Wände (zwecks Aufrechterhaltung einer bestimmten Arbeitstemperatur) verzichtet werden. Dies ist natürlich nicht nur konstruktiv, sondern auch aus Kostengründen von Vorteil.

Da weder die abgepresste Sirte noch die Reinigungsflüssigkeit einfach auf den Boden fliessen, sondern vielmehr direkt aufgefangen werden, kann auf die aufwendige Installation einer im Boden des Arbeitsraums integrierten Auffangwanne weitgehend verzichtet werden. Eine erfindungsgemässe Anlage lässt sich somit nahezu an jedem Ort ohne grössere Bauinvestitionen aufstellen.

Gemäss einer besonders bevorzugten Ausführungsform ist der Pressencontainer, insbesondere der Deckel mit einem integrierten Reinigungssystem ausgestattet. Nach dem Auspacken der gepressten Käselaibe kann die Anlage in eine Waschanlage umfunktioniert werden. Die Utensilien der Käseherstellung und der Pressvorrichtungen können in der Wanne durch die im Deckel integrierte Reinigungseinrichtung automatisch gereinigt werden.

Das Reinigungssystem weist vorzugsweise Leitungen und Sprühdüsen auf zum Verteilen und Versprühen von Reinigungsflüssigkeit. Der Deckel weist also vorzugsweise nur ein Leitungssystem und keine Pumpen u. dgl. auf.

Gemäss einer besonders bevorzugten Ausführungsform der Erfindung weist der Deckel mehrere Leitungsanschlüsse zum Zuführen der Reinigungsflüssigkeit auf. Die Leitungsanschlüsse sind dabei (d. h. bei geschlossenem Deckel) jeweils über einer Pressvorrichtung angeordnet. Sie können an ein externes Leitungssystem angeschlossen werden, das im übrigen auch zum Zuführen des Bruchgemisches dient. Ein Reinigungskreislauf ist vorzugsweise extern geschlossen. Dies hat den Vorteil eines beträchtlich reduzierten Reinigungsmittelverbrauchs. Als zusätzlicher Vorteil ist die gleichzeitige Reinigung des Bruchgemischzuführsystems zu betrachten.

Der Deckel ist z. B. um eine im Abstand zu ihm angeordnete Achse dreh- resp. schwenkbar. Vorzugsweise handelt es sich um die Drehachse des Tragbalkens. Der Deckel kann also gleichsam rotierend zur Seite geschoben werden und hat infolgedessen einen nur geringen Platzbedarf. Da die Pressen ohnehin wendbar sein müssen, beansprucht der Deckel im Prinzip keinen zusätzlichen Platz.

Gemäss einer besonders bevorzugten Ausführungsform ist der Deckel beim Oeffnen um eine vorgegebene Distanz teleskopartig von der Drehachse (und damit natürlich von der Wanne) wegzubewegen. Dies ermöglicht die Benutzung einer dampfdurchlässigen Labyrinthdichtung zwischen Deckel und Wanne.

Wie bereits erwähnt, ist die ganze Anlage von einem drehbaren Tragbalken getragen.

Gemäss einer besonders vorteilhaften Ausführungsform ist die Wanne mit Mitteln zum Klimatisieren ihres Innenraums ausgestattet. Es kann sich z. B. um Leitungsrohre oder Flachkanäle handeln, die während des Pressvorgangs zur Einhaltung einer bestimmten Temperatur von Wasser durchflossen sind. Vorzugsweise sind die Flachkanäle an einer Seitenwand der Wanne befestigt oder in ihr integriert.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Nachfolgend soll die Erfindung anhand von Ausführungsbeispielen und im Zusammenhang mit den Zeichnungen näher erläutert werden. Es zeigen:
- Fig. 1a,b: Eine schematische Darstellung einer erfindungsgemässen Anlage im Querschnitt und in der Draufsicht;
- Fig. 2: eine Wanne mit Deckel im Achsenquerschnitt;
- Fig. 3a-c: einen erfindungsgemässen Deckel mit integriertem Waschsystem in der Draufsicht und im Achsenquerschnitt sowie sein längsseitiges Ende im Achsenlängsschnitt;
- Fig. 4: eine schematische Darstellung des Mechanismus zum Schwenken des Deckels.

Grundsätzlich sind in den Figuren gleiche Teile mit gleichen Bezugszeichen versehen.

### Wege zur Ausführung der Erfindung

Ein an seinen Lagerzapfen 2.1, 2.2 um seine Längsachse drehbar gelagerter Tragbalken 1 trägt eine Mehrzahl von Pressvorrichtungen 3.1, ..., 3.9. Der Tragbalken 1 ist z. B. im Querschnitt rechteckig. Fünf Pressvorrichtungen 3.1, ..., 3.5 sind auf der einen Seite und vier auf der diametral gegenüberliegenden zweiten Seite des Tragbalkens 1 montiert. (Selbstverständlich entspricht die Anzahl der Pressvorrichtungen der jeweils erforderlichen Systemkapazität.)

Die einzelnen Pressvorrichtungen 3.1, ..., 3.9 sind vorzugsweise auf die im Schweizer Patentgesuch Nr. 1 268/92-2 beschriebene Weise ausgeführt. D. h. ein Doppelzylinderpresssystem ist im Tragbalken eingelassen und treibt eine Pressform und eine Pressplatte individuell ansteuerbar gegen eine dem Tragbalken 1 gegenüberliegend angeordnete Gegenplatte. Die Gegenplatte ist in einer weiter unten beschriebenen Art durch ein Gegenkreuz und ein Gestänge abgestützt.

Damit die Presszylinderanordnungen der Pressvorrichtungen im Tragbalken untergebracht werden können, sind die auf gegenüberliegenden Seiten angeordneten Pressvorrichtungen 3.1, ..., 3.5 resp. 3.6, ..., 3.9 gegeneinander verschoben angeordnet (gleichsam in Zwischenstellung).

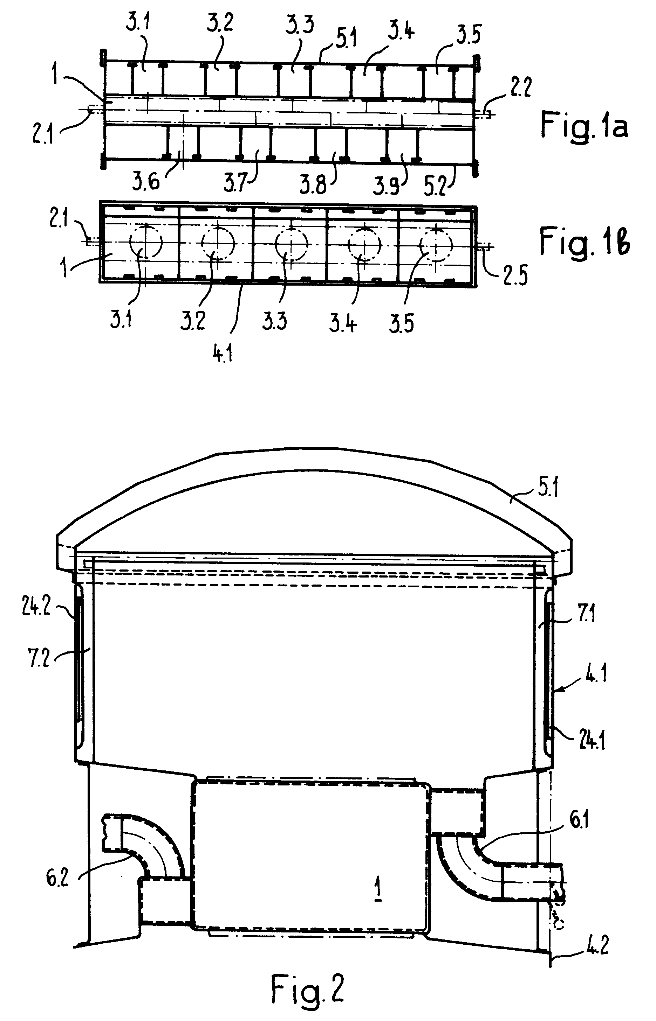

Wie aus Fig. 1b zu entnehmen ist, sind die Pressvorrichtungen 3.1, ..., 3.5 in einer gemeinsamen Wanne 4.1 untergebracht. In entsprechender Weise sind die Pressvorrichtungen 3.6, ..., 3.9 in einer zweiten Wanne 4.2 angeordnet (vgl. auch Fig. 2). Beide Wannen sind jeweils mit einem Deckel 5.1, 5.2 verschliessbar.

Fig. 2 zeigt den Tragbalken 1 und die Wanne 4.1 im Achsenquerschnitt. Mit 4.2 ist die andeutungsweise gezeichnete zweite Wanne bezeichnet.

Ueber der Oeffnung der Wanne 4.1 wölbt sich z. B. zylindrisch der Deckel 5.1. Zwischen Deckel 5.1 und Wanne 4.1 ist eine Labyrinthdichtung vorgesehen (vgl. dazu auch Fig. 3b mit zugehöriger Beschreibung).

An der Unterseite der Wanne 4.1, 4.2 sind verschliessbare Ausläufe 6.1, 6.2 vorgesehen. Die nach oben zeigende Wanne 4.1 lässt sich durch den Auslauf 6.1 entleeren. Die zweite Wanne 4.2 kann über im Deckel vorgesehene, jedoch nicht näher dargestellte Ausläufe entleert werden.

An der Innenseite der Seitenwände der Wanne 4.1 sind z. B. strebenartige Zugverankerungen 7.1 vorgesehen, die an ihrem oberen Ende z. B. einen Bajonettverschluss zum Einhängen und Verankern des bereits weiter oben erwähnten Gegenkreuzes aufweisen.

In der Seitenwand der Wanne 4.1 sind gemäss einer bevorzugten Ausführungsform Flachrohre 24.1, 24.2 integriert. Ueber nicht näher dargestellte Anschlüsse kann z. B. Eiswasser zum Kühlen des Wanneninnenraums zugeführt werden. Ganz allgemein stellen die genannten Flachrohre 24.1, 24.2 Teil einer Klimatisierungsanlage zur Temperierung des Wanneninnenraums während des Pressens dar.

Die Wanne 4.2 ist im wesentlichen gleich ausgeführt wie die Wanne 4.1. Eine detaillierte Beschreibung derselben erübrigt sich daher.

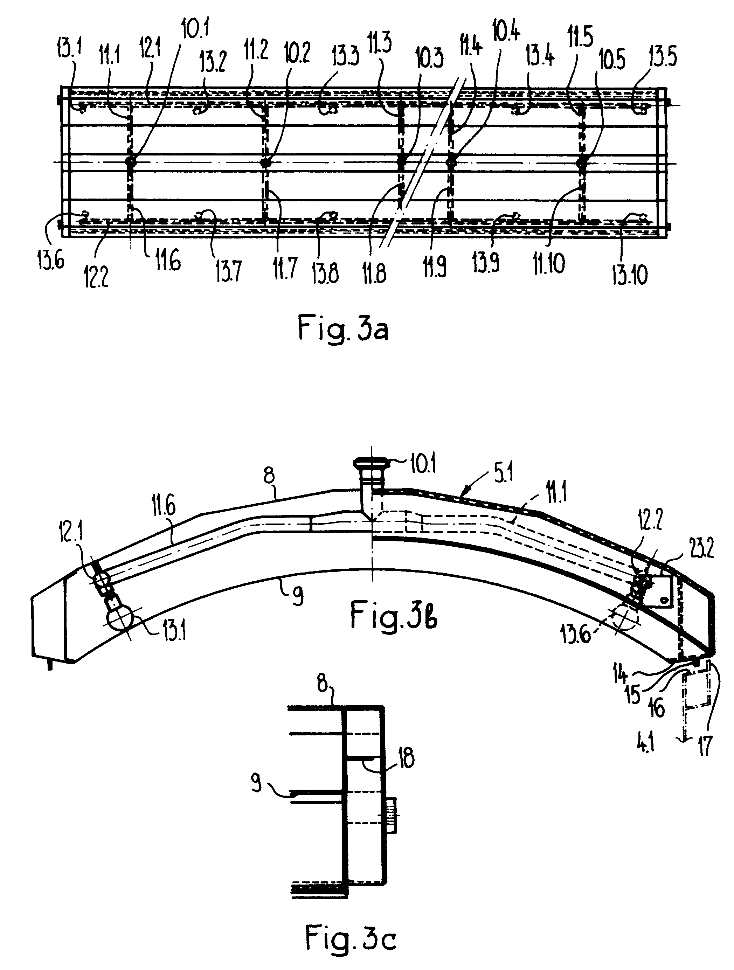

Anhand der Fig. 3a,b,c soll nun eine besonders vorteilhafte Ausführungsform des Deckels erläutert werden. Er beinhaltet ein Reinigungssystem, das zwischen einer im wesentlichen zylindrisch gewölbten Aussenhaut 8 und einer entsprechend gewölbten Innenhaut 9 untergebracht ist (vgl. Fig. 3b). Aus der Aussenhaut 8 ragen eine Mehrzahl von Anschlussstutzen 10.1, ..., 10.5 heraus. Sie sind in regelmässigen Abständen entlang der Längsmittelachse des Deckels vorgesehen. Bei geschlossenem Deckel (und vertikal ausgerichteter Wanne) befinden sich die genannten Anschlussstutzen 10.1, ..., 10.5 genau unter den Bruchgemischzufuhrleitungen und über den Pressvorrichtungen 3.1, ..., 3.5 (vgl. Fig. 1a,b). Der Sinn dieser Anordnung liegt darin, dass die Stutzen 10.1, ..., 10.5 an die Bruchgemischzufuhrleitungen (die alternativ einen Teil des Reinigungskreislaufes bilden) angeschlossen werden können.

Von den Anschlussstutzen 10.1, ..., 10.5 führen jeweils zwei Querleitungen 11.1, 11.6 resp. 11.2, 11.7 resp. ... 11.5, 11.10 weg. Die Querleitungen 11.1, ..., 11.10 verlaufen im wesentlichen quer zur Längsachse des Deckels 5.1 und speisen zwei Längsleitungen 12.1, 12.2, welche in der Nähe der Längsränder des Deckels 5.1 verlaufen. Entlang der Längsleitungen 12.1, 12.2 sind eine Vielzahl von Kugelsprühdüsen 13.1, ..., 13.5 resp. 13.6, ..., 13.10 verteilt. Sie dienen dazu, die über die Anschlussstutzen 10.1, ..., 10.5 zugeführte Reinigungsflüssigkeit in die Wanne resp. in die Pressformen zu spritzen. Die Kugelsprühdüsen 13.1, ..., 13.10 sind so gestaltet und angeordnet, dass sowohl Wanne 4.1 und Deckel 5.1 als auch die Pressformen innenseitig vollständig gereinigt werden. (Die Reinigungsflüssigkeit wird wie bereits erwähnt am Boden der Wanne 4.1 an Ausläufen 6.1 abgezogen.)

Zwischen Deckel 5.1 und Wanne 4.1 ist eine Labyrinthdichtung vorgesehen (vgl. Fig. 3b, rechts). Entlang des seitlichen Randes sind am Deckel 5.1 eine schräg nach innen laufende Randfläche 14 mit einer nach unten ragenden Rippe 15 vorgesehen. Die Rippe 15 verläuft entlang des gesamten Randes und dient als Tropfnase. Unterhalb der Rippe 15 ist am Rand der Wanne 4.1 eine ebenfalls nach innen geneigte Randfläche 16 vorgesehen. Am äussersten Rand der Randfläche 16 ist (am Wannenrand) eine nach oben ragende Rippe 17 ausgebildet. Die Rippe 17 verläuft ausserhalb der Rippe 15.

Da es für Wasserspritzer u. dgl. keinen direkten Weg nach aussen gibt (Prinzip der Labyrinthdichtung), kann keine Reinigungsflüssigkeit zwischen Wanne 4.1 und Deckel 5.1 nach aussen dringen. Das auf die Randfläche 14 treffende Wasser läuft nach innen und tropft an der Kante zwischen Randfläche 14 und Innenhaut 15 ab. Sinngemäss fliesst das von der Rippe 15 abtropfende Wasser auf der Randfläche 16 nach innen ab.

Fig. 3c zeigt das schmalseitige Ende des Deckels 5.1 im Achsenlängsschnitt. Bemerkenswert ist eine gegenüber der Innenhaut 9 nach aussen zurückversetzte Randfläche 18. Sie wirkt zusammen mit dem an dieser Stelle nach oben ragenden schmalseitigen Wannenrand im Sinn einer Labyrinthdichtung.

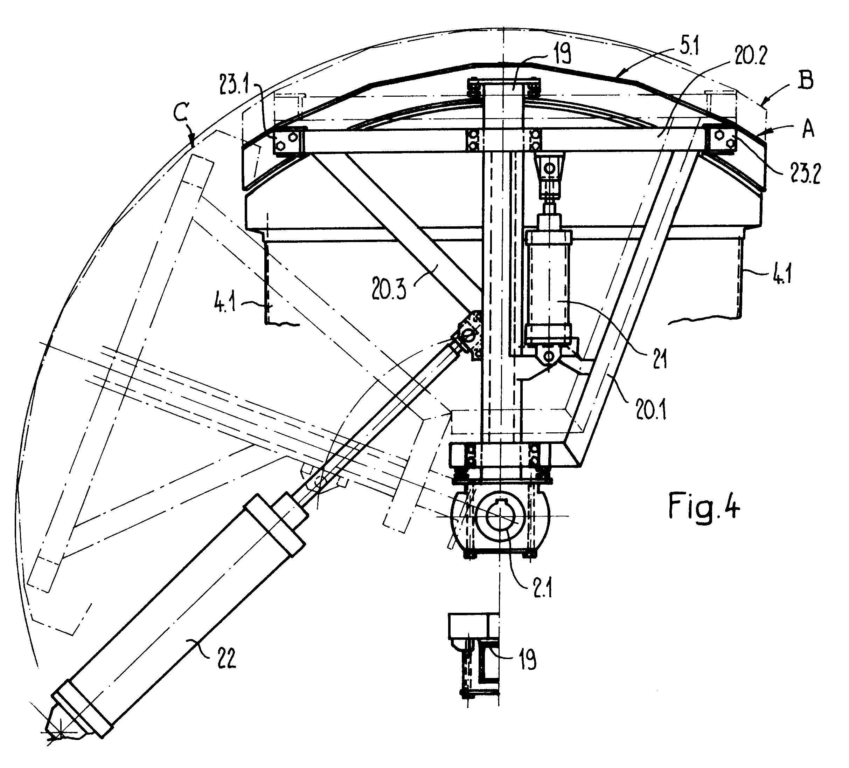

Das Oeffnen und Schliessen des Deckels 5.1 soll anhand der Fig. 4 im einzelnen erläutert werden. Auf den bereits im Zusammenhang mit der Fig. 1a,b erwähnten Lagerzapfen 2.1, 2.2 ist ein im Querschnitt vorzugsweise rechteckiges Führungsrohr 19 drehbar gelagert. Es steht senkrecht zur Längsachse des Tragbalkens. Auf dem Führungsrohr 19 ist eine Tragkonstruktion aus z. B. Trägern 20.1, 20.2, 20.3 (in einer bezüglich der Längsachse des Tragbalkens radialen Richtung) verschiebbar gelagert. Die genannte Tragkonstruktion weist einen Querbalken (Träger 20.2) auf, der im wesentlichen senkrecht zum Führungsrohr 19 steht und an seinen beiden Enden mit der Stirnseite des Deckels 5.1 verbunden ist (Schraubverbindung 23.1, 23.2). Ein Hubzylinder 21, der parallel zum Führungsrohr 19 steht und auf diesem resp. auf dem Tragbalken abgestützt ist, greift an der Tragkonstruktion an und dient zum Anheben und Absenken des Deckels 5.1 von der resp. auf die Wanne 4.1.

In Fig. 4 ist mit A die abgesenkte und mit B die angehobene Position des Deckels 5.1 angedeutet. Befindet sich nun der Deckel 5.1 in der Position B, dann kann er zur Seite bewegt werden, um die Wannenöffnung freizugeben. Der Deckel wird um die Achse des Lagerzapfens 2.1 (um ca. 70°) zur Seite gedreht. Dies wird von einem pneumatischen Zylinder 22 bewerkstelligt, welcher einerseits an einem raumfesten Ort (z. B. am Traggestell der Gesamtanlage) abgestützt ist und andererseits mit dem Führungsrohr 19 (resp. einer mit dem Führungsrohr starr verbundenen Hilfskonstruktion) verbunden ist.

Ist der Deckel 5.1 in die Position C geschwenkt, dann ist die Wanne 4.1 frei zugänglich und es können z. B. die Pressvorrichtungen gefüllt und entleert werden.

Im folgenden soll ein typischer Betrieb der erfindungsgemässen Anlage beschrieben werden.

Zunächst wird der Deckel 5.1 in die Position C gebracht. Die zylindrischen Behälter der Pressvorrichtungen werden sodann mit einem Sirten-Käse-Bruchgemisch gefüllt. Dies erfolgt über festinstallierte Leitungen, deren Auslass jeweils über einen Behälter endet.

Sodann werden die Gegenplatten aufgelegt und die Gegenkreuze an den Zugverankerungen (vgl. Bezugszeichen 7.1, 7.2 in Fig. 2) befestigt.

Der Deckel 5.1 wird geschlossen (durch Betätigen des Zylinders 22 und nachfolgendes Absenken des Deckels 5.1 durch Hubzylinder 21 wird die Position A erreicht) und das Pressprogramm wird in Gang gesetzt. Erforderlichenfalls wird in dieser Zeit die Wanne 4.1 mit Hilfe von geeignet temperiertem Wasser (welches durch die Flachrohre 24.1, 24.2 geleitet wird) klimatisiert. Während des Pressens wird der Pressencontainer samt Inhalt als Einheit mehrmals gewendet.

Nach Beendigung des Pressprogramms wird der Deckel 5.1 wieder zur Seite (in die Position C) geschwenkt, damit die Käselaibe entnommen werden können. Danach werden die zu reinigenden Gegenstände in die Wanne gelegt und der Deckel 5.1 wieder geschlossen. Die Leitungen zum Zuführen des Bruchgemisches werden an die Anschlussstutzen 10.1, ..., 10.5 angeschlossen. Von einer separaten Reinigungsstation wird Reinigungsflüssigkeit (z. B. durch die Bruchgemischpumpe) in den Deckel gepumpt und durch die Sprühdüsen verspritzt. Die ebenfalls an die externen Leitungen angeschlossenen Ausläufe 6.1, 6.2 führen die Reinigungsflüssigkeit (ev. nach einer Vorreinigung) in den Speicherbehälter zurück. Dadurch dass das Verteilungssystem für das Sirten-Käse-Bruchgemisch Teil des Reinigungssystems bildet, muss das Verteilsystem nicht separat gereinigt werden. Ebenfalls lässt sich mit geringem Aufwand ein geschlossener Kreislauf bilden.

Ist die ganze Anlage gereinigt, dann kann die nächste Charge gepresst werden.

Die Erfindung beschränkt sich natürlich nicht auf die beschriebene Ausführungsform. Das Verteilsystem für das Sirten-Käse-Bruchgemisch braucht nicht ins Reinigungssystem integriert zu sein. Die Wanne kann z. B. auch teilweise mit der Reinigungsflüssigkeit gefüllt werden, die mittels einer Pumpe an den Ausläufen der Wanne abgezogen und über einen oder mehrere Anschlussstutzen des Deckels wieder eingespritzt wird. Es versteht sich, dass ein geschlossener Reinigungskreislauf aus ökonomischen und ökologischen Gründen in der Regel zu bevorzugen ist. Im Prinzip kann aber die Reinigung auch im offenen Kreislauf erfolgen.

Der Tragbalken ist im oben erläuterten Beispiel beidseitig mit Pressvorrichtungen, Wanne und Deckel bestückt. Dies erhöht die Kapazität der Anlage natürlich beträchtlich. Bei kleineren Anlagen kann eine einseitige Bestückung ausreichend sein.

Die Erfindung eignet sich primär für grössere Anlagen, welche eine Mehrzahl von Pressvorrichtungen aufweisen. Im Prinzip kann sie aber auch bei Einzelpressen verwirklicht werden. D. h. jede Pressvorrichtung hat eine eigene Wanne mit Deckel.

Der Deckel kann auch in anderer Weise verschoben resp. geschwenkt werden. Insbesondere ist es möglich, ihn (z. B. bei ganz kleinen Anlagen) von Hand oder mittels einer Hebevorrichtung (Kran) abzunehmen und aufzusetzen.

Die erfindungsgemässe Schwenkvorrichtung ist natürlich besonders platzsparend.

Die Labyrinthdichtung kann auch durch eine andersartige Dichtung ersetzt werden. Auch die Klimatisierung des Wanneninnenraums ist natürlich nur eine vorteilhafte, nicht aber zwingende Massnahme.

Zusammenfassend kann festgehalten werden, dass durch die Erfindung die bestehenden Pressvorrichtungen komfortabler und effizienter gemacht werden können.

## Patentansprüche

1. Anlage für die Herstellung von Hart- und Extrahartkäse mit mindestens einer Pressvorrichtung, dadurch gekennzeichnet, dass die mindestens eine Pressvorrichtung (3.1, ..., 3.5) in einem zusammen mit der Pressvorrichtung wendbaren Pressencontainer umfassend eine Wanne (4.1) mit Deckel (5.1) untergebracht ist.

2. Anlage nach Anspruch 1, dadurch gekennzeichnet, dass der Pressencontainer, vorzugsweise der Deckel (5.1) mit einem integrierten Reinigungssystem (10.1, ..., 10.5, 11.1, ..., 11.10, 12.1, 12.2, 13.1, ..., 13.10) ausgestattet ist.

3. Anlage nach Anspruch 2, dadurch gekennzeichnet, dass das Reinigungssystem im Deckel (5.1) integrierte Leitungen (11.1, ..., 11.10, 12.1, 12.2) und Sprühdüsen (13.1, ..., 13.10) aufweist zum Verteilen und Versprühen von Reinigungsflüssigkeit.

4. Anlage nach Anspruch 3, dadurch gekennzeichnet, dass der Deckel (5.1) mehrere Leitungsanschlüsse (10.1, ..., 10.5) zum Zuführen der Reinigungsflüssigkeit aufweist.

5. Anlage nach einem der Ansprüche 1 bis 4, dadurch gekennzeichnet, dass das Reinigungssystem bezüglich Pressencontainer (4.1, 5.1) extern schliessbar ist und dass es als Reinigungsmittelzuführungen zumindest einen Teil der Bruchgemischleitungen nutzt.

6. Anlage nach einem der Ansprüche 1 bis 5, dadurch gekennzeichnet, dass der Deckel (5.1) um eine im Abstand zu ihm angeordnete Achse drehbar ist.

7. Anlage nach Anspruch 6, dadurch gekennzeichnet, dass - beim Oeffnen - der Deckel (5.1) um eine vorgegebene Distanz teleskopartig von der Wanne (4.1) wegbewegbar ist.

8. Anlage nach einem der Ansprüche 1 bis 7, dadurch gekennzeichnet, dass die Pressvorrichtungen (3.1, ..., 3.5) und die Wanne (4.1) auf einem gemeinsamen, um seine Längsachse drehbaren Tragbalken (1) montiert sind und dass der Deckel (5.1) um die genannte Längsachse schwenk- bzw. drehbar ist.

9. Anlage nach einem der Ansprüche 1 bis 8, dadurch gekennzeichnet, dass die Wanne (4.1) Mittel (24.1, 24.2) zum Klimatisieren ihres Innenraums aufweist.

10. Anlage nach Anspruch 9, dadurch gekennzeichnet, dass als Mittel zum Klimatisieren in oder an einer Seitenwand der Wanne (4.1) Flachkanäle (24.1, 24.2) angeordnet sind, durch die eine Flüssigkeit geleitet werden kann.

11. Anlage nach einem der Ansprüche 1 bis 9, dadurch gekennzeichnet, dass zwischen Deckel (5.1) und Wanne (4.1) eine Labyrinthdichtung (14, 15, 16, 17) vorgesehen ist.

12. Deckel für eine Anlage nach einem der Ansprüche 1 bis 11, dadurch gekennzeichnet, dass er ein integriertes Reinigungssystem aufweist.
